# EUROPEAN PATENT SPECIFICATION

(11) **EP 2 303 592 B1**
(45) Date of publication and mention of the grant of the patent: **04.12.2013**
(21) Application number: 09785428.5
(22) Date of filing: 31.07.2009
(51) Int. Cl.: B42D 1/00, B42D 3/12

(54) **BOOK**
BUCH
LIVRE

(30) Priority: 31.07.2008 GB 0813983
(43) Date of publication of application: 06.04.2011
(73) Proprietor: Novalia Ltd, Cambridge Cambridgeshire CB5 8RE (GB)
(72) Inventor: STONE, Kate, Cambridge Cambridgeshire CB4 3NL (GB)
(74) Representative: Piotrowicz, Pawel Jan Andrzej
(86) International application number: PCT/GB2009/050954
(87) International publication number: WO 2010/013061

(56) References cited:
- WO-A-94/12963
- GB-A- 2 440 730
- US-A1- 2008 012 721
- US-A1- 2008 067 231
- US-B1- 6 491 220

## Description

The present invention relates to a book.

Electronic printed books, i.e. printed books which include electronic devices, are known.

For example, WO-A-94 12963 describes an electronic book comprising a plurality of leaves. Each leaf comprises pages of printed material bound at one edge to form a spine with electrical circuits formed in each leaf. A common electronic circuit, such as a speech generator and/or controller, cooperates with the electrical circuits on each of the various pages, connected to the electrical circuits in the leaves through conductive paths through the spine of the book. The electrical circuits in the leaves include electrical elements, such as switches, and sensory output devices, such as light emitting diodes. To connect the common electrical circuit to the circuits in each leaf, the book employs a corrugated continuous sheet on which ink is printed. The continuous sheet forms either the leaves of the book or a spine of flaps between which leaves are inserted.

GB-A-2 440 730 describes a book including interconnected electrical components. The book is made by applying conductive ink to a sheet of material to define a conductive track on the sheet. The conductive track extends beyond the edge of the sheet to form an electrical connection. Pages are individually cut and glued to a spine, bound with fabric carrying which is screen printed with conducting ink and which is glued to the spine. Links are led to the edge of the paper via conductive ink lines. Lines of conductive ink are led to a hard cover, to a printed circuit board with a microcontroller.

US-B-6 491 220 describes a writing pad for use with a computer which includes a number of sheets each having a flexure sensor affixed thereto. Circuitry connected to the sensors determines whether the sheets are lifted and removed from the pad, whereby the particular sheet currently in use may be identified. The flexure sensor system can be used in various configurations such as a one or multiple-part checkbook which can recognize check writing environment or a children's book to add sound to identified pages. The flexure sensors include resistive structures such as carbon based goo, transducers, conductive inks, strain gauges, patterned dissolved graphite, embossed sensors or other pressure/flexure sensors.

According to a first aspect of the present invention there is provided a book comprising at least two pages, each page comprising a laminate of at least two sheet portions and a printed circuit sheet comprising a substrate and conductive tracks disposed on the substrate, wherein the printed circuit sheet has first and second portions, wherein at least some of the conductive tracks run from the first to the second portion of the printed circuit sheet, wherein the second portion of the printed circuit sheet comprises at least two fingers, wherein each finger supports at least one electronic device for providing user input and/or output and wherein each finger is inserted into a respective page in between sheet portions.

Thus, a circuit can be easily incorporated into the book.

The first portion of the printed circuit sheet may support at least part of a circuit operatively connected to the at least one electronic device. The at least part of a circuit may include a microcontroller. The first portion of the printed circuit sheet may support a battery.

The conductive tracks may comprise conductive ink. The substrate may be flexible and may comprise a plastics material. The substrate may be formed in a single piece.

The book may include a cover comprising a laminate of at least two sheet portions. The first portion of the printed circuit sheet may be inserted into a page or cover in between the sheet portions.

The first portion of the printed circuit sheet may comprise at least three fingers. The fingers may have the same shape and/or dimensions.

Each finger may be provided with at least one electronic device for providing user input and/or output. The fingers may extend from the first portion of the printed circuit sheet. The fingers may be attached at respective proximal ends to the first portion of the printed circuit sheet. The fingers may extend from one edge of the first portion of the printed circuit sheet.

The at least one electronic device may include at least one input device. The at least one input device may include a switch. The switch may comprise a pair of conductive pads separated by gap which is bridgeable by a finger of a user.

The at least one electronic device include at least one output device. The at least one output device may include a light emitting device, such as a light emitting diode. The at least one output device may include a display.

The at least one output device may include a sound emitting device.

The first portion of the printed circuit sheet may support at least one electronic device for providing user input and/or output.

The printed circuit sheet may comprise first and second faces and the conductive tracks may be disposed on both faces.

The printed circuit sheet may comprise first and second faces, wherein the conductive tracks are disposed on the first face, wherein the printed circuit sheet further comprises a third region, wherein the printed circuit sheet is foldable so that the third region lies overlaps with the second region and the second and third regions have opposite-facing first faces.

The book may be a board book.

According to a second aspect of the present invention there is provided a printed circuit sheet for integrating into a book comprising a substrate and conductive tracks disposed on the substrate, wherein the printed circuit sheet has first and second portions, wherein at least some of the conductive tracks run from the first to the second portion of the printed circuit sheet, wherein the second portion of the printed circuit sheet comprises at least two fingers, each finger provided with at least one electronic device for providing user input and/or output.

According to a third aspect of the present invention there is provided a method of bookbinding comprising providing a printed circuit sheet comprising a substrate and conductive tracks disposed on the substrate, wherein the printed circuit sheet has first and second portions, wherein at least some of the conductive tracks run from the first to the second portion of the printed circuit sheet, wherein the second portion of the printed circuit sheet comprises at least two fingers, each finger provided with at least one electronic device for providing user input and/or output, providing at least two pages, each page comprising a laminate of two sheet portions, and inserting a finger into a respective page in between sheet portions.

The laminate may comprise a folded sheet comprising the first and second sheet portions.

The method may further comprise inserting the first portion of the printed circuit sheet into a page or cover in between the sheet portions.

Embodiments of the present invention will now be described, by way of example, with reference to the accompanying drawings in which:
Figure 1 is a perspective view of an embodiment of book in accordance with the present invention;
Figure 2 is end view of the book shown in Figure 1;
Figure 2a is a perspective view of two folded sheets;
Figure 3 is a perspective view of a printed circuit sheet included in the book shown in Figure 1;
Figure 4 is a plan view of the printed circuit sheet shown in Figure 3;
Figure 4a is a detailed plan view of a switch used in the circuit shown in Figure 4;
Figure 4b is a detailed plan view of part of the circuit where a light emitting diode is mounted;
Figure 5 is an exploded view of a portion of the book shown in Figure 1;

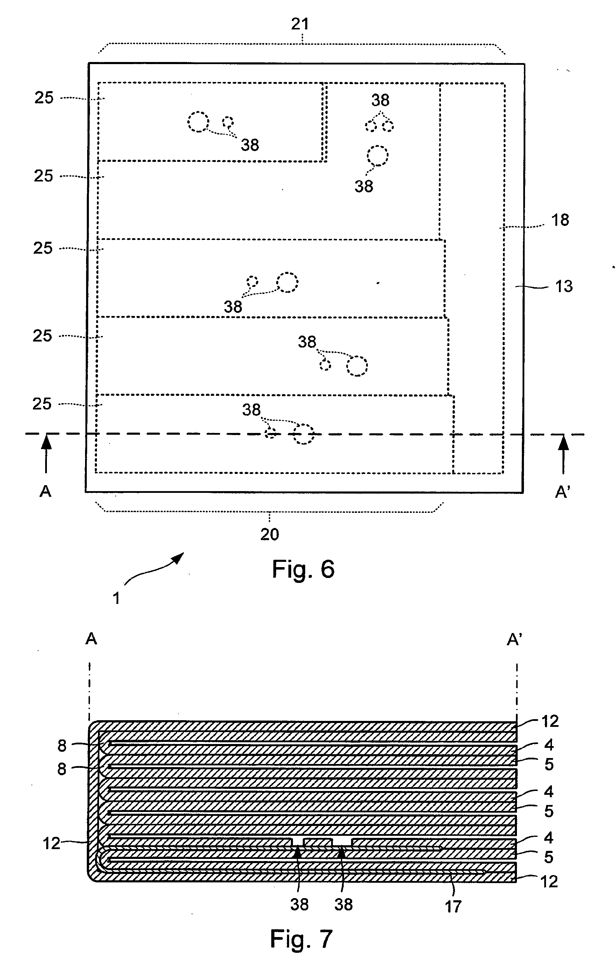

Figure 6 is a plan view of the book shown in Figure 1;
Figure 7 is a cross section of the book shown in Figure 1 taken along the line A-A'; and
Figures 8a to 8c illustrate steps during manufacture of the book shown in Figure 1.

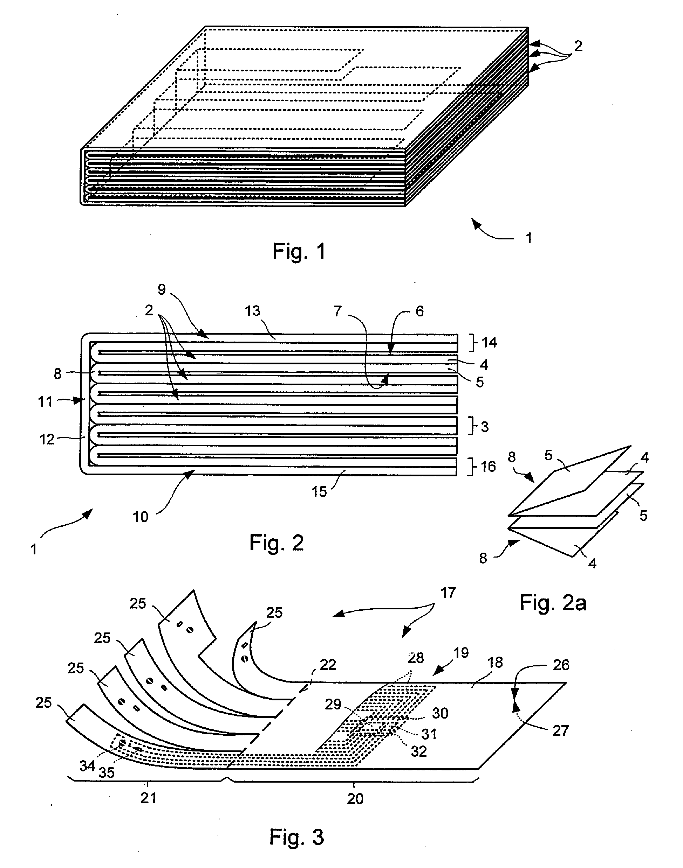

Referring to Figures 1 and 2, a book 1 in accordance with the present invention is shown. In this example, the book 1 is a children's board book comprising board or stiff card.

The book 1 includes a plurality of leaves or pages 2, each page 2 comprising a laminate 3 including first and second sheet portions 4, 5. Each page 2 has first and second sides 6, 7 bearing printed indicia. In this example, the book 1 comprises five pages 2, although the book 1 may contain fewer or more pages.

Referring also to Figure 2a, the laminates 3 are formed using a plurality of folded sheets 8 comprising, in this case, board or stiff card, in which a first sheet portion 4 (e.g. right-hand side of the sheet 8) of one sheet 8 is joined to a second sheet portion 5 (e.g. left-hand side of the sheet) of another sheet 8. The sheet portions 4, 5 in a laminate 8 are stuck together using glue (not shown).

The book 1 also includes front and back covers 9, 10 and a spine 11. The front and back covers 9, 10 share a cover sheet 12 comprising board or stiff card. A portion 13 of the cover sheet 12 is laminated with a first portion 4 of a first sheet 8 as to form a front cover laminate 14. Likewise, a portion 15 of the cover sheet 12 is laminated with a second portion 5 of a last sheet 8 as to form a back cover laminate 16.

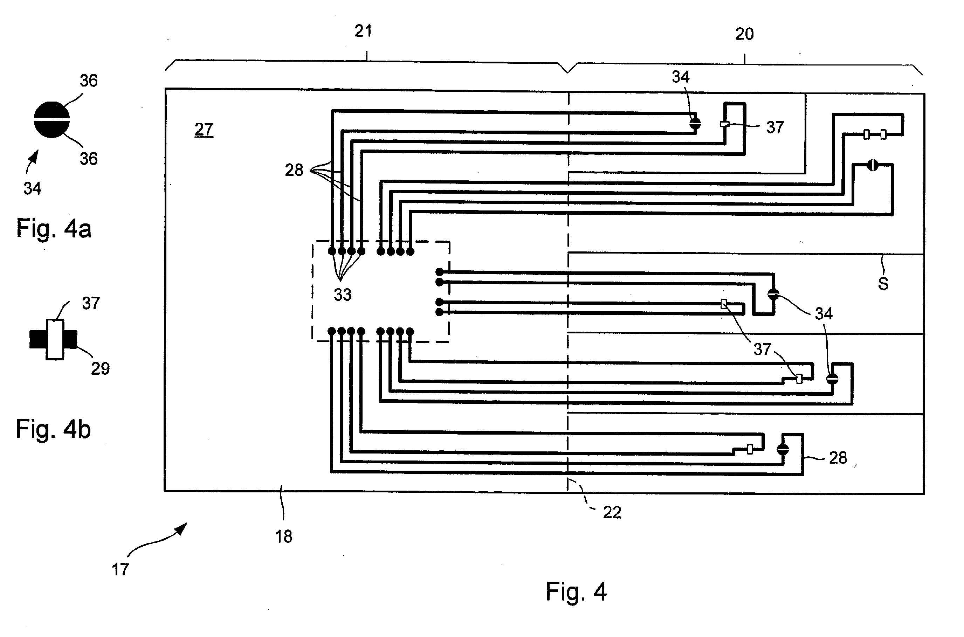

Referring also to Figures 3 and 4, the book 1 includes a printed circuit sheet 17 comprising a flexible substrate 18 which supports a circuit 19.

The printed circuit sheet 17 is divided into first and second portions 20, 21. In this example, the printed circuit sheet 17 is generally elongate and is divided along a line 22 running across the sheet 17. Thus, the line 22 defines an edge between first and second portions 20, 21.

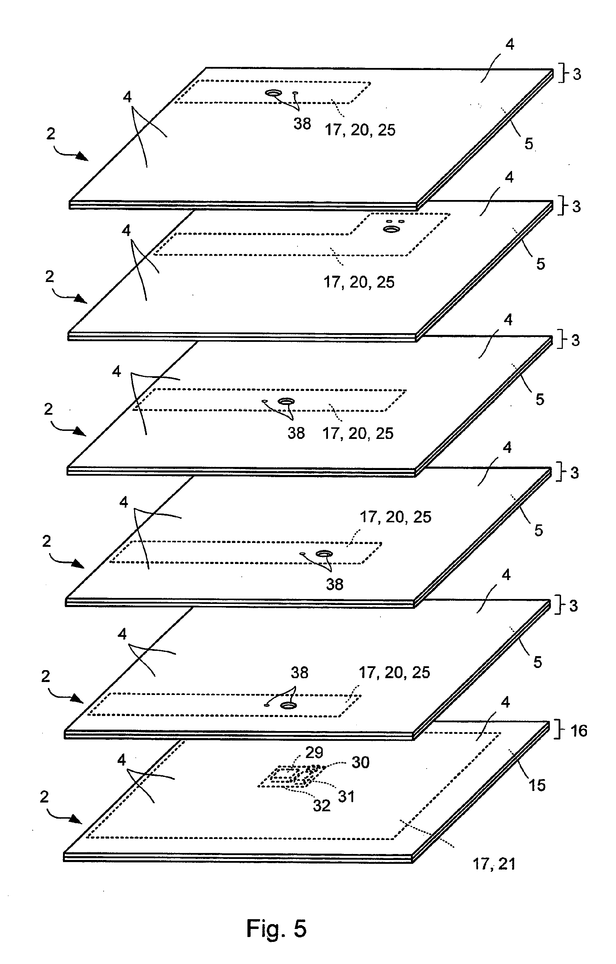

Extending away from the first portion 20 of the printed circuit sheet 17, the second portion 21 of the sheet 17 comprises a row of two or more separate ribbon-like fingers or strips 25 which can be independently folded back over the first portion 20 of the printed circuit sheet 17. The fingers 25 are separated by slits or cuts S. Referring in particular to Figure 5, one or more fingers 25 can be provided for one or more pages 2. In this example, a finger 25 is sandwiched between sheet portions 4, 5 of each respective laminate 3. The fingers 25 are generally elongate and run across the page.

Referring in particular again to Figures 3 and 4, the printed circuit sheet 17 has first and second faces 26, 27.

The circuit 19 is provided on one or both faces of the printed circuit sheet 17. In this example, the circuit 19 is provided only on the second face 27.

The circuit 19 includes a plurality of tracks 28 comprising conductive ink which connects other components. The tracks 28 comprise a silver-based conductive ink. Suitable conductive inks are available from Sun Chemical Corporation, Parsippany, New Jersey, USA. Other forms of conductive ink can be used, such as a copper-based conductive ink or some other metallic-based conductive ink, or a carbon-based conductive ink. The tracks 28 are formed using a printing process, such as screen printing, ink jet printing, flexography or offset printing.

The circuit 19 also includes a microcontroller 29, associated discrete components 30 and a battery 31. In this example, the microcontroller 29, discrete components 30 and battery 31 are provided on a printed circuit board 32. The printed circuit board 32 is connected to contact pads 33 at the end of the tracks 28 by conductive glue (not shown). The microcontroller 29 may be a PIC(RTM) microcontroller available from Microchip Technology Inc., Chandler, Arizona, USA.

Additional or alternative power sources can be provided. For example, a solar cell may be used, which may be disposed in or on a page or cover. Where the solar cell is located disposed in a page or cover (i.e. inserted between sheet portions) a window is provided in a sheet portion.

The circuit 19 also includes switches 34 and light emitting diodes 35 disposed on the fingers 25.

Referring to Figure 4a, each switch 34 takes the form of a resistive touch sensitive switch comprising a pair of closely-separated pads 36 which are bridgeable by a finger of a user. However, other forms of switch can be used, such as a push-button switch (e.g. a dome switch) or a non-contact switch (e.g. a capacitive sensing switch). Other forms of input device can be used, such as photoresistor or microphone. Different types of input device may be used, e.g. a switch on one page and photoresistor on another page.

Referring again to Figures 3 and 4 and also to Figure 4b, the light emitting diodes 35 comprise ultra-thin surface mount light emitting diodes which are glued to the tracks 28 by conductive glue (not shown). Holes or slots 37 are punched-out from the sheet 17 to break a track 28 so as to prevent conductive glue flowing together to short the contacts.

Light emitting diodes may be formed directly on the substrate 18, e.g. in the form of organic light emitting diodes. Other forms of light or visual output device can be used, such as electrochromic display.

Sound emitting devices may also be used, such as speakers or buzzers. In particular, a sound emitting device may be incorporated into the back or front cover.

The printed circuit sheet 17 is formed from one piece. However, the sheet 17 may be assembled from more than one piece. For example, fingers may be attached to a base sheet which may have contact regions or may have short fingers, i.e. tabs or stubs, to which fingers or sheets may be attached to the fingers so as to provide extensions. This can enable devices to be spread across more of a page, even across the whole page.

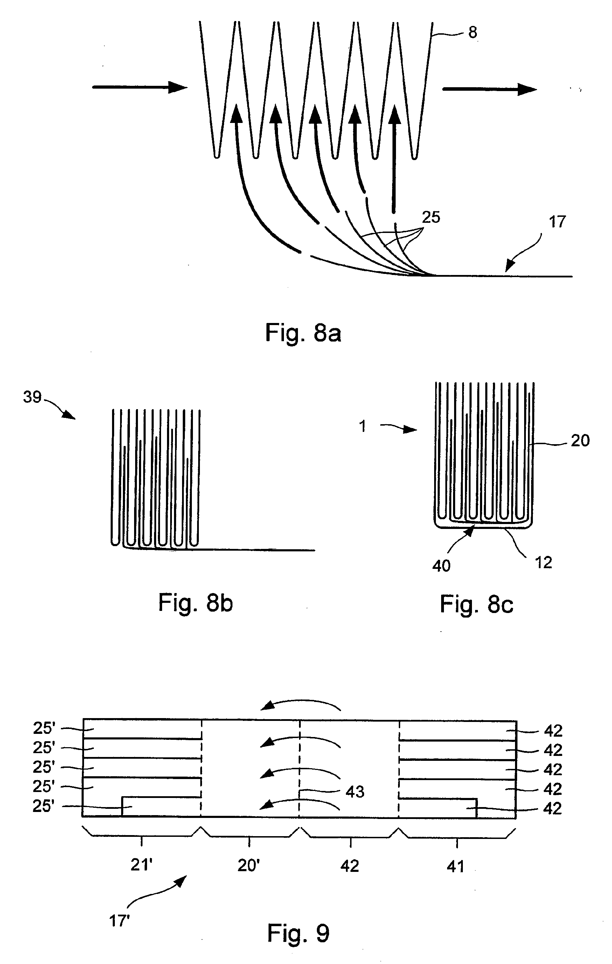

To enable a reader to actuate the switches 34 and to see the light emitting diodes 35, holes or slots 38 are punched-out from the sheet 8. The switches 34 and light emitting diodes 35 positioned on the sheet 17 so as to be aligned with the holes 38. Referring to Figures 8a to 8d, a method of manufacturing the book (Figure 1) will now be described.

As folded sheets 8 (also referred to as "two-page spreads") are joined together, glue is applied and a finger 25 is inserted between the sheets 8. The folded sheets 8 are assembled until a book block 39 is completed.

A cover 12 is then wrapped around a backbone 40 of the book block 39 and is attached by glue (not shown). The first portion 20 of the printed circuit sheet 17 is sandwiched between book block 39 and the cover 12. The book 1 may be trimmed.

An advantage of using a printed circuit sheet 17 is that it can be printed in a similar way to the sheets 8 of the book using similar process. Furthermore, the printed circuit sheet 17 can be incorporated into the book more easily than, for example, separate wires or leads, which may require knowledge about where to route the wires. Additionally, a printed circuit sheet 17 and the devices supported by the sheet can be easily placed in the correct position in between sheets. Another advantage is that the printed circuit sheet 17 can be thin (for example of the order of 10 or 100 µm) and flexible.

Referring to Figure 9, another printed circuit sheet 17' is shown.

As explained earlier, the conductive tracks 28 (Figure 3) may be printed on both sides 26, 27 (Figure 3) of the printed circuit sheet 17 (Figure 3) so as to allow switches and light emitting diodes to be provided on opposite sides of the same page. However, the need for printing on both sides may be avoided using the printed circuit sheet 17'.

The printed circuit sheet 17' includes first and second regions 20', 21' similar to the printed circuit sheet 17 (Figure 3) described earlier. The second region 21' includes a set of fingers 25' which have the same configuration, e.g. geometry and dimensions, as the fingers 25 (Figure 3) hereinbefore described.

The printed circuit sheet 17' includes a third region 41 which includes additional fingers 42 which extend in an opposite direction to fingers 25'. The two sets of fingers 25, 25' are a mirror image of each other, although they need not be.

The printed circuit sheet 17' also includes a fourth region 42 between the first and third regions 20, 41. The fourth region 42 may be an extension of the third region.

The third and fourth portions 41, 42 of the printed circuit sheet 17' can be folded back over the first and second portions 20', 21' at fold line 43 separating the first and fourth regions 20', 42 so that corresponding fingers 25, 25' in each set of fingers 25, 25' overlap, e.g. coextensively, to provide back-to-back fingers.

A pair of back-to-back fingers can be inserted between sheet portions of one page and so provide switches and light emitting diodes on both sides of the page without the need for printing on both sides of the printed circuit sheet.

It will be appreciated that many modifications may be made to the embodiments hereinbefore described. For example, the book need not be a board book. The book may be formed from paper, card, cardboard or plastic. Sheets which are laminates *per se* may be used. The tracks may be covered by other layers of ink providing text or graphics. It will be appreciated that the book may be manufactured using larger-numbered page spreads.

## Claims

1. A book (1) comprising:
at least two pages (2), each page comprising a laminate (3) of at least two sheet portions (4, 5); and
a printed circuit sheet (17) comprising a substrate (18) and conductive tracks (28) disposed on the substrate, wherein the printed circuit sheet has first and second portions (20, 21), wherein at least some of the conductive tracks run from the first to the second portion of the printed circuit sheet, wherein the second portion of the printed circuit sheet comprises at least two fingers (25), wherein each finger supports at least one electronic device (34, 35) for providing user input and/or output and wherein each finger is inserted into a respective page in between sheet portions.

2. A book according to claim 1, wherein the first portion (20) of the printed circuit sheet supports:
at least part of a circuit (19) operatively connected to the at least one electronic device (34, 35) and, optionally, wherein the at least part of a circuit (19) includes a microcontroller (29); and/or
a battery.

3. A book according to any preceding claim, wherein:
the conductive tracks (28) comprise conductive ink; and/or
the substrate (18) is flexible; and/or
the substrate (18) comprises a plastics material; and/or
the substrate (18) is formed in a single piece.

4. A book according to any preceding claim, including a cover (9, 10) comprising a laminate (14, 15) of at least two sheet portions, and, optionally, wherein the first portion (20) of the printed circuit sheet (17) is inserted into a page or the cover in between the sheet portions.

5. A book according to any preceding claim, wherein:
the first portion of the printed circuit sheet comprises at least three fingers (25); and/or
the fingers (25) extend from the first portion of the printed circuit sheet; and/or
the fingers (25) are attached at respective proximal ends to the first portion of the printed circuit sheet; and/or
the finger (25) extends from one edge of the first portion (20) of the printed circuit sheet (17).

6. A book according to any preceding claim, wherein:
the at least one electronic device (34, 35) includes at least one input device (34), and optionally, wherein the at least one input device (34) includes a switch and, optionally, wherein the switch comprises a pair of conductive pads separated by gap which is bridgeable by a finger of a user.

7. A book according to any preceding claim, wherein:
the at least one electronic device (34, 35) includes at least one output device (35) and, optionally, wherein the at least one output device (35) includes a light emitting device, such as a light emitting diode, and/or a display and/or a sound emitting device.

8. A book according to any preceding claim, wherein the first portion (20) of the printed circuit sheet (17) supports at least one electronic device for providing user input and/or output.

9. A book according to any preceding claim, wherein the printed circuit sheet (17) comprises first and second faces (26, 27) and wherein the conductive tracks are disposed on both faces.

10. A book according to any preceding claim, wherein the printed circuit sheet (17) comprises first and second faces (26, 27), wherein the conductive tracks are disposed on the first face, wherein the printed circuit sheet further comprises a third region, wherein the printed circuit sheet is foldable so that the third region lies overlaps with the second region and the second and third regions have opposite-facing first faces.

11. A book according to any preceding claim, wherein the book is a board book.

12. A printed circuit sheet (17) for integrating in a book comprising:
a substrate (18); and
conductive tracks (28) disposed on the substrate,
wherein the printed circuit sheet has first and second portions (20, 21), wherein at least some of the conductive tracks run from the first to the second portion of the printed circuit sheet, wherein the second portion of the printed circuit sheet comprises at least two fingers (25), each finger provided with at least one electronic device (34, 35) for providing user input and/or output.

13. A method of bookbinding comprising:
providing a printed circuit sheet (17) comprising a substrate (18) and conductive tracks (28) disposed on the substrate, wherein the printed circuit sheet has first and second portions (20, 21), wherein at least some of the conductive tracks run from the first to the second portion of the printed circuit sheet, wherein the second portion of the printed circuit sheet comprises at least two fingers (25), each finger provided with at least one electronic device (34, 35) for providing user input and/or output;
providing at least two pages (2), each page comprising a laminate (3) of two sheet portions (4, 5); and
inserting a finger (25) into a respective page in between sheet portions.

14. A method according to claim 13, wherein the laminate (3) comprises a folded sheet (8), the sheet comprising the first and second sheet portions (4, 5).

15. A method according to claim 13 or 14, further comprising:
inserting the first portion (20) of the printed circuit sheet into a page (2) or cover (9, 10) in between the sheet portions.

## Patentansprüche

1. Buch (1), das Folgendes umfasst:
wenigstens zwei Seiten (2), wobei jede Seite ein Laminat (3) von wenigstens zwei Blattabschnitten (4, 5) umfasst; und
ein gedrucktes Leiterblatt (17), das ein Substrat (18) und auf dem Substrat angeordnete Leiterbahnen (28) umfasst, wobei das gedruckte Leiterblatt einen ersten und einen zweiten Abschnitt (20, 21) aufweist, wobei wenigstens einige der Leiterbahnen vom ersten zum zweiten Abschnitt des gedruckten Leiterblatts verlaufen, wobei der zweite Abschnitt des gedruckten Leiterblatts wenigstens zwei Finger (25) aufweist, wobei jeder Finger wenigstens ein elektronisches Bauelement (34, 35) zum Geben von Benutzerein- und/oder -ausgaben trägt und wobei jeder Finger in eine jeweilige Seite zwischen Blattabschnitten eingeführt wird.

2. Buch nach Anspruch 1, wobei der erste Abschnitt (20) des gedruckten Leiterblattes Folgendes trägt:
wenigstens einen Teil einer Schaltung (19), die mit dem wenigstens einen elektronischen Bauelement (34, 35) wirkverbunden ist, wobei optional der wenigstens eine Teil einer Schaltung (19) eine Mikrosteuerung (29) beinhaltet; und/oder
eine Batterie.

3. Buch nach einem vorherigen Anspruch, wobei:
die Leiterbahnen (28) leitfähige Druckfarbe umfassen; und/oder
das Substrat (18) flexibel ist; und/oder
das Substrat (18) ein Plastikmaterial umfasst; und/oder
das Substrat (18) in einem einzigen Stück gefertigt ist.

4. Buch nach einem vorherigen Anspruch, das einen Deckel (9, 10) aufweist, der ein Laminat (14, 15) aus wenigstens zwei Blattabschnitten umfasst, und wobei optional der erste Abschnitt (20) des gedruckten Leiterblattes (17) in eine Seite oder den Deckel zwischen den Blattabschnitten eingeführt wird.

5. Buch nach einem vorherigen Anspruch, wobei:
der erste Abschnitt des gedruckten Leiterblattes wenigstens drei Finger (25) aufweist; und/oder
die Finger (25) sich vom ersten Abschnitt des gedruckten Leiterblattes erstrecken; und/oder
die Finger (25) an jeweiligen proximalen Enden am ersten Abschnitt des gedruckten Leiterblattes befestigt sind; und/oder
der Finger (25) sich von einem Rand des ersten Abschnitts (20) des gedruckten Leiterblattes (17) erstreckt.

6. Buch nach einem vorherigen Anspruch, wobei:
das wenigstens eine elektronische Bauelement (34, 35) wenigstens ein Eingabebauelement (34) aufweist und wobei optional das wenigstens eine Eingabebauelement (34) einen Schalter beinhaltet und wobei der Schalter optional ein Paar leitfähige Kontaktstellen umfasst, die durch eine Lücke getrennt sind, die von einem Finger eines Benutzers überbrückt werden kann.

7. Buch nach einem vorherigen Anspruch, wobei:
das wenigstens eine elektronische Bauelement (34, 35) wenigstens ein Ausgabebauelement (35) aufweist, und wobei das wenigstens eine Ausgabebauelement (35) optional ein Leuchtbauelement wie z.B. eine Leuchtdiode und/oder ein Display und/oder ein Tonausgabebauelement beinhaltet.

8. Buch nach einem vorherigen Anspruch, wobei der erste Abschnitt (20) des gedruckten Leiterblattes (17) wenigstens ein elektronisches Bauelement zum Geben von Benutzerein- und/oder -ausgaben unterstützt.

9. Buch nach einem vorherigen Anspruch, wobei das gedruckte Leiterblatt (17) eine erste und eine zweite Fläche (26, 27) umfasst, wobei die Leiterbahnen auf beiden Flächen angeordnet sind.

10. Buch nach einem vorherigen Anspruch, wobei das gedruckte Leiterblatt (17) eine erste und eine zweite Fläche (26, 27) umfasst, wobei die Leiterbahnen auf der ersten Fläche angeordnet sind, wobei das gedruckte Leiterblatt ferner eine dritte Region aufweist, wobei das gedruckte Leiterblatt faltbar ist, so dass die dritte Region mit der zweiten Region überlappt, und die zweite und dritte Region gegenüberliegende erste Flächen aufweisen.

11. Buch nach einem vorherigen Anspruch, wobei das Buch ein Pappbuch (Board Book) ist.

12. Gedrucktes Leiterblatt (17) zum Integrieren in ein Buch, das Folgendes umfasst:
ein Substrat (18); und
auf dem Substrat angeordnete Leiterbahnen (28),
wobei das gedruckte Leiterblatt einen ersten und einen zweiten Abschnitt (20, 21) aufweist, wobei wenigstens einige der Leiterbahnen vom ersten zum zweiten Abschnitt des gedruckten Leiterblattes verlaufen, wobei der zweite Abschnitt des gedruckten Leiterblattes wenigstens zwei Finger (25) aufweist, wobei jeder Finger mit wenigstens einem elektronischen Bauelement (34, 35) zum Geben von Benutzerein- und/oder -ausgaben versehen ist.

13. Verfahren zum Buchbinden, das Folgendes beinhaltet:
Bereitstellen eines gedruckten Leiterblattes (17), das ein Substrat (18) und auf dem Substrat angeordnete Leiterbahnen (28) umfasst, wobei das gedruckte Leiterblatt einen ersten und einen zweiten Abschnitt (20, 21) aufweist, wobei wenigstens einige der Leiterbahnen vom ersten zum zweiten Abschnitt des gedruckten Leiterblattes verlaufen, wobei der zweite Abschnitt des gedruckten Leiterblattes wenigstens zwei Finger (25) aufweist, wobei jeder Finger mit wenigstens einem elektronischen Bauelement (34, 35) zum Geben von Benutzerein- und/oder -ausgaben versehen ist;
Bereitstellen von wenigstens zwei Seiten (2), wobei jede Seite ein Laminat (3) von zwei Blattabschnitten (4, 5) umfasst; und
Einführen eines Fingers (25) in eine jeweilige Seite zwischen Blattabschnitten.

14. Verfahren nach Anspruch 13, wobei das Laminat (3) ein gefaltetes Blatt (8) umfasst, wobei das Blatt den ersten und zweiten Blattabschnitt (4, 5) umfasst.

15. Verfahren nach Anspruch 13 oder 14, das ferner Folgendes beinhaltet:
Einführen des ersten Abschnitts (20) des gedruckten Leiterblatts in eine(n) Seite (2) oder Deckel (9, 10) zwischen den Blattabschnitten.

## Revendications

1. Livre (1) comprenant :
au moins deux pages (2), chaque page comprenant un stratifié (3) d'au moins deux parties de feuille (4, 5) ; et
une feuille de circuit imprimé (17) comprenant un substrat (18) et des pistes conductrices (28) disposées sur le substrat, la feuille de circuit imprimé ayant des première et seconde parties (20, 21), dans laquelle au moins certaines des pistes conductrices s'étendent depuis la première partie jusqu'à la seconde partie de la feuille de circuit imprimé, la seconde partie de la feuille de circuit imprimé comprenant au moins deux doigts (25), chaque doigt supportant au moins un dispositif électronique (34, 35) pour permettre une entrée d'utilisateur et/ou une sortie et dans lequel chaque doigt est inséré dans une page respective entre des parties de feuille.

2. Livre selon la revendication 1, dans lequel la première partie (20) de la feuille de circuit imprimé supporte :
au moins une partie d'un circuit (19) connecté opérationnellement à l'au moins un dispositif électronique (34, 35) et, éventuellement, dans lequel l'au moins une partie d'un circuit (19) comporte un microcontrôleur (29) ; et/ou
une batterie.

3. Livre selon l'une quelconque des revendications précédentes, dans lequel :
les pistes conductrices (28) comprennent une encre conductrice ; et/ou
le substrat (18) est souple ; et/ou
le substrat (18) comprend un matériau plastique ; et/ou
le substrat (18) est formé d'un seul tenant.

4. Livre selon l'une quelconque des revendications précédentes, comportant une couverture (9, 10) comprenant un stratifié (14, 15) d'au moins deux parties de feuille, et, éventuellement, dans lequel la première partie (20) de la feuille de circuit imprimé (17) est insérée dans une page ou la couverture entre les parties de feuilles.

5. Livre selon l'une quelconque des revendications précédentes, dans lequel :
la première partie de la feuille de circuit imprimé comprend au moins trois doigts (25) ; et/ou
les doigts (25) s'étendent depuis la première partie de la feuille de circuit imprimé ; et/ou
les doigts (25) sont attachés au niveau d'extrémités proximales respectives à la première partie de la feuille de circuit imprimé ; et/ou
le doigt (25) s'étend depuis un bord de la première partie (20) de la feuille de circuit imprimé (17).

6. Livre selon l'une quelconque des revendications précédentes, dans lequel :
l'au moins un dispositif électronique (34, 35) comporte au moins un dispositif d'entrée (34), et éventuellement, dans lequel l'au moins un dispositif d'entrée (34) comporte un commutateur et, éventuellement, dans lequel le commutateur comprend une paire de plages conductrices séparées par un entrefer qui est pontable par un doigt d'un utilisateur.

7. Livre selon l'une quelconque des revendications précédentes, dans lequel :
l'au moins un dispositif électronique (34, 35) comporte au moins un dispositif de sortie (35), et éventuellement, dans lequel l'au moins un dispositif de sortie (35) comporte un dispositif électroluminescent, tel qu'une diode électroluminescente, et/ou un afficheur et/ou un dispositif émetteur de son.

8. Livre selon l'une quelconque des revendications précédentes, dans lequel la première partie (20) de la feuille de circuit imprimé (17) supporte au moins un dispositif électronique pour permettre une entrée d'utilisateur et/ou une sortie.

9. Livre selon l'une quelconque des revendications précédentes, dans lequel la feuille de circuit imprimé (17) comprend des première et seconde faces (26, 27) et dans lequel les pistes conductrices sont disposées sur les deux faces.

10. Livre selon l'une quelconque des revendications précédentes, dans lequel la feuille de circuit imprimé (17) comprend des première et seconde faces (26, 27), dans lequel les pistes conductrices sont disposées sur la première face, la feuille de circuit imprimé comprenant en outre une troisième région, la feuille de circuit imprimé étant pliable de telle sorte que la troisième région chevauche la deuxième région et que les deuxième et troisième régions aient des premières faces opposées.

11. Livre selon l'une quelconque des revendications précédentes, le livre étant un livre cartonné.

12. Feuille de circuit imprimé (17) destinée à être imprimée dans un livre comprenant :
un substrat (18) ; et
des pistes conductrices (28) disposées sur le substrat,
la feuille de circuit imprimé ayant des première et seconde parties (20, 21), dans laquelle au moins certaines des pistes conductrices s'étendent depuis la première partie jusqu'à la seconde partie de la feuille de circuit imprimé, la seconde partie de la feuille de circuit imprimé comprenant au moins deux doigts (25), chaque doigt étant doté d'au moins un dispositif électronique (34, 35) pour permettre une entrée d'utilisateur et/ou une sortie.

13. Procédé de reliure comprenant :
la fourniture d'une feuille de circuit imprimé (17) comprenant un substrat (18) et des pistes conductrices (28) disposées sur le substrat, la feuille de circuit imprimé ayant des première et seconde parties (20, 21), dans laquelle au moins certaines des pistes conductrices s'étendent depuis la première partie jusqu'à la seconde partie de la feuille de circuit imprimé, la seconde partie de la feuille de circuit imprimé comprenant au moins deux doigts (25), chaque doigt étant doté d'au moins un dispositif électronique (34, 35) pour permettre une entrée d'utilisateur et/ou une sortie ;
la fourniture d'au moins deux pages (2), chaque page comprenant un stratifié (3) de deux parties de feuille (4, 5) ; et
l'insertion d'un doigt (25) dans une page respective entre des parties de feuille.

14. Procédé selon la revendication 13, dans lequel le stratifié (3) comprend une feuille pliée (8), la feuille comprenant les première et seconde parties de feuille (4, 5).

15. Procédé selon la revendication 13 ou 14, comprenant en outre :
l'insertion de la première partie (20) de la feuille de circuit imprimé dans une page (2) ou une couverture (9, 10) entre les parties de feuille.
